# EUROPÄISCHE PATENTSCHRIFT

(11) **EP 2 101 196 B1**
(45) Veröffentlichungstag und Bekanntmachung des Hinweises auf die Patenterteilung: **26.10.2011**
(21) Anmeldenummer: 09001742.7
(22) Anmeldetag: 07.02.2009
(51) Int. Cl.: G01V 8/12, G02B 17/08

(54) **Optischer Sensor mit Lichtkonzentrator**
Optical sensor with light concentrator
Capteur optique avec concentrateur de lumière

(30) Priorität: 14.03.2008 DE 102008014349
(43) Veröffentlichungstag der Anmeldung: 16.09.2009
(73) Patentinhaber: Leuze electronic GmbH + Co KG, 73277 Owen/Teck (DE)
(72) Erfinder: Huß, Jörg, 73230 Kirchheim/Teck (DE); Dokman, Nikola, 72555 Metzingen (DE); Carrle, Wolfgang, 73277 Owen/Teck (DE)
(74) Vertreter: Ruckh, Rainer Gerhard

(56) Entgegenhaltungen:
- EP-A- 1 845 401
- EP-A- 1 962 013
- DE-A1- 19 748 522
- DATABASE WPI Week 200421 Thomson Scientific, London, GB; AN 2004-217370 XP002535053 & JP 2003 281909 A (SEIWA DENKI KK) 3. Oktober 2003 (2003-10-03)

## Beschreibung

Die Erfindung betrifft einen optischen Sensor.

Derartige optische Sensoren dienen zur Erfassung von Objekten in einem Überwachungsbereich. Die optischen Sensoren, die allgemein als Lichttaster, Distanzsensoren, Reflexionslichtschranken, Lichtschranken und dergleichen ausgebildet sein können, weisen generell einen Sendelichtstrahlen emittierenden Sender, einen Empfangslichtstrahlen empfangenden Sender sowie eine Auswerteeinheit, in welcher aus den Empfangssignalen des Empfängers ein Objektfeststellungssignal generiert wird, auf. Die Empfänger können ein einzelnes Empfangslichtstrahlen empfangendes Empfangselement oder auch eine Mehrfachanordnung von derartigen Empfangselementen aufweisen.

Dem Sender eines solchen optischen Sensors ist typischerweise eine Sendeoptik vorgeordnet, die zur Strahlformung der Sendelichtstrahlen dient. Im einfachsten Fall besteht eine derartige Sendeoptik aus einer einzelnen Linse, die in einem vorgegebenen Abstand vom Sender angeordnet ist. Je nach Brennweite der Linse und nach Abstand der Linse zum Sender werden die durch die Linse geführten Sendelichtstrahlen auf einen bestimmten Punkte fokussiert oder es wird ein kollimierter Lichtstrahl erzeugt.

Ein erstes Problem einer derart ausgebildeten Sendeoptik besteht darin, dass bedingt durch die divergente Abstrahlcharakteristik des Senders, der beispielsweise von einer Leuchtdiode gebildet sein kann, stets ein gewisser Teil des Sendelichts nicht auf die in Abstand zum Sender angeordneten Sendeoptik geführt wird, so dass dieser Teil des Sendelichts für die Objektdetektion verloren ist. Um diesem Problem zu begegnen, ist bereits versucht worden, eine Sendeoptik mit zwei hintereinander angeordneten Linsen einzusetzen, wobei die erste Linse in geringem Abstand zum Sender angeordnet ist und dazu dient, möglichst viel Sendelicht vom Sender einzufangen, um dieses Sendelicht dann der dahinter liegenden zweiten Linse zuzuführen, die dann die eigentliche Strahlformung der Sendelichtstrahlen vornimmt. Nachteilig hierbei ist, dass auch die erste Linse noch in einem beträchtlichen Abstand zum Sender angeordnet sein muss, so dass auch in diesem Fall von der Sendeoptik nur ein unerwünscht kleiner Teil des Sendelichts eingefangen wird und zur Objektdetektion bereitsteht, wodurch die Nachweisempfindlichkeit des optischen Sensors reduziert wird. Weiterhin ist nachteilig, dass zur Ausbildung der Sendeoptik zwei separate Linsen eingesetzt werden müssen, die zum Sender und relativ zueinander ausgerichtet und dann lagefixiert werden müssen.

Ein weiteres Problem entsteht dann, wenn mit derartigen Sendeoptiken spezielle Strahlquerschnitte, insbesondere quadratische oder rechteckige Strahlquerschnitte, erzeugt werden sollen. Da mit den Linsen der Sendeoptik stets kreisförmige oder elliptische Strahlquerschnitte erzeugt werden, müssen als zusätzliche Elemente der Sendeoptik Blenden vorgesehen werden. Der Einsatz derartiger Blenden reduziert jedoch die Lichtmenge des zur Objektdetektion zur Verfügung stehenden Sendelichts noch weiter, was die Nachweisempfindlichkeit des optischen Sensors weiter reduziert.

Die EP 1 962 013 A1 betrifft eine Fokussierlinse für eine Leuchtdiode. Die Lichtaustrittsfläche der Linse weist ein konvexes asphärisches Element auf. An seitlichen Mantelflächen der Linse findet eine Totalreflexion des von der Leuchtdiode emittierten Lichts statt. Die Leuchtdiode wird in eine Aussparung am hinteren Ende der Linse eingesetzt.

Die JP 2003 28 19 09 A betrifft einen Projektor zur Strahlformung von Lichtstrahlen einer Leuchtdiodenlampe. Der Projektor weist verspiegelte Oberflächen auf.

Ein gattungsgemäßer optischer Sensor mit den Merkmalen des Oberbegriffs des Anspruchs 1 ist aus der EP 1 845 401 A1 bekannt.

Der Erfindung liegt die Aufgabe zugrunde, einen optischen Sensor bereitzustellen, welcher bei geringem konstruktivem Aufwand eine möglichst hohe Nachweisempfindlichkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und umfasst einen Sendelichtstrahlen emittierenden Sender, einen Empfangslichtstrahlen empfangenden Empfänger, eine Auswerteeinheit, in welcher in Abhängigkeit der Empfangssignale am Ausgang des Empfängers ein Objektfeststellungssignal generiert wird, und eine dem Sender vorgeordnete Sendeoptik zur Strahlformung der Sendelichtstrahlen. Der Sender ist in einem Gehäuse integriert, in dessen Frontwand ein Fenster vorgesehen ist. Der Sender weisen einen Sendelichtstrahlen emittierenden Chip, der von einem Reflektorrichter umgeben ist, auf. Sendelichtstrahlen die vom Chip emittiert werden, gelangen direkt oder nach Reflexion an dem Reflektortrichter aus dem Sender und weist eine divergende Strahlcharakteristik auf. Die Sendeoptik schließt unmittelbar an den Sender an und weist einen Konzentrator auf, der ein Lichtführungselement für die Sendelichtstrahlen bildet. Hierzu erfolgt an der Mantelfläche des Konzentrators eine Totalreflexion der Sendelichtstrahlen. Die dem Sender zugeordnete Stirnseite des Konzentrators ist als konkave Einkoppelfläche für die Sendelichtstrahlen ausgebildet, welche die gesamte Fläche des Fensters abdeckt. Die Sendelichtstrahlen sind innerhalb des Konzentrators in Richtung dessen Längsachse geführt. An der dem Sender abgewandten Stirnseite des Konzentrators ist eine Austrittsfläche vorgesehen, welche ein Strahlformungsmittel für die Sendelichtstrahlen bildet und welche eine konvexe Fläche ist.

Mit der erfindungsgemäßen Sendeoptik gelingt auf einfache Weise eine signifikante Erhöhung der Nachweisempfindlichkeit des optischen Sensors, da der direkt auf dem Sender aufsitzende Konzentrator nahezu das gesamte Sendelicht des Sender aufnimmt und zur Strahlformung nutzt, das heißt die optischen Verluste können im Vergleich zu herkömmlichen Sendeoptiken in Form einzelner Linsen signifikant reduziert werden.

Wesentlich hierbei ist, dass der Konzentrator, dessen Längsachse vorteilhaft mit der optischen Achse des Senders zusammenfällt, durch eine Totalreflexion der Sendelichtstrahlen an dessen Mantelfläche das komplette Sendelicht in dessen Innenraum führt, wobei bereits durch eine geeignete Formgebung der Mantelfläche die Strahlformung in gewünschter Weise vorgegeben oder zumindest beeinflusst wird.

Besonders vorteilhaft weist die Mantelfläche eine parabolische Form auf. Weiterhin können die Mantelflächen auch in Form von Freiformflächen oder zylindrischen Flächen ausgebildet sein.

Generell ist die Mantelfläche des Konzentrators so ausgebildet, dass an dieser eine Totalreflexion der Sendelichtstrahlen erfolgt, wodurch gewährleistet ist, dass nur ein geringer Teil der Sendelichtstrahlen über die Mantelfläche austritt.

Durch eine Verspiegelung der Mantelfläche kann ein Austreten von Sendelicht über diese Mantelfläche sogar vollständig verhindert werden.

Dadurch wird erreicht, dass nahezu das gesamte Sendelicht des Senders im Konzentrator geführt wird und über die Austrittsfläche des Konzentrators austritt, so dass es zur Objektdetektion zur Verfügung steht.

Ein weiterer wesentlicher Vorteil der Erfindung besteht darin, dass durch die Vorgabe der Austrittsfläche der Strahlquerschnitt in gewünschter Weise vorgegeben werden kann. Dies bedeutet insbesondere, dass Blenden als separate Bauteile zur Strahlformung, welche zu einer unerwünschten Reduzierung des zur Objektdetektion zur Verfügung stehenden Sendelichts führen, nicht mehr benötigt werden.

Im Vergleich zu Sendeoptiken, bei welchen Blenden neben einzelnen Linsen eingesetzt werden, wird somit einerseits die Ausbeute des nutzbaren Sendelichts verbessert und gleichzeitig die Teilezahl der Sendeoptik und damit der Montageaufwand zur Herstellung der Sendeoptik beträchtlich reduziert.

Dabei ist der Konzentrator der Sendeoptik besonders vorteilhaft von einem Kunststoff-Spritzgussteil gebildet, welches besonders kostengünstig und rationell herstellbar ist.

Durch eine geeignete Ausbildung der Austrittsfläche können die Strahlprofile der Sendelichtstrahlen flexibel vorgegeben werden. Besonders vorteilhaft weist der Konzentrator zur Generierung von Sendelichtstrahlen mit rechteckigen oder quadratischen Strahlquerschnitten eine torische Austrittsfläche auf.

Erfindungsgemäß bildet die Einkoppelfläche selbst ein optisches Element und ist hierzu als konkave Fläche, insbesondere als sphärische Fläche ausgebildet, die unmittelbar an den Sender anschließt. Dadurch gelingt eine besonders vollständige Einkopplung der Sendelichtstrahlen vom Sender in den Konzentrator.

Insbesondere für den Fall, dass der Konzentrator der erfindungsgemäßen Sendeoptik keine verspiegelten Flächen aufweist, ist darauf zu achten, dass der Konzentrator so innerhalb des optischen Sensors gelagert wird, dass dessen Mantelfläche nicht großflächig in Kontakt mit anderen Gegenständen ist, da ansonsten über diese Kontaktstellen Sendelicht aus dem Konzentrator austreten würde.

Hierzu ist zur Lagefixierung der Sendeoptik eine Halterung vorgesehen, die punkt- oder linienförmige Kontaktelemente aufweist, die an der Mantelfläche des Konzentrators anliegen. Bevorzugt bildet die Halterung eine Dreipunktlagerung des Konzentrators.

Da somit die Halterung nur punktuell an der Mantelfläche anliegt, ist gewährleistet, dass über die Kontaktstellen, an welchen die Kontaktelemente der Halterung an der Mantelfläche des Konzentrators anliegen, nur ein sehr geringer Anteil des Sendelichts austritt.

Die Erfindung wird im Folgenden anhand der Zeichnungen erläutert. Es zeigen:
- Figur 1:: Schematische Darstellung eines optischen Sensors.
- Figur 2:: Darstellung des Senders und der Sendeoptik des optischen Sen- sors gemäß Figur 1.
- Figur 3:: Querschnittdarstellung einer Halterung für die Sendeoptik ge- mäß Figur 2.

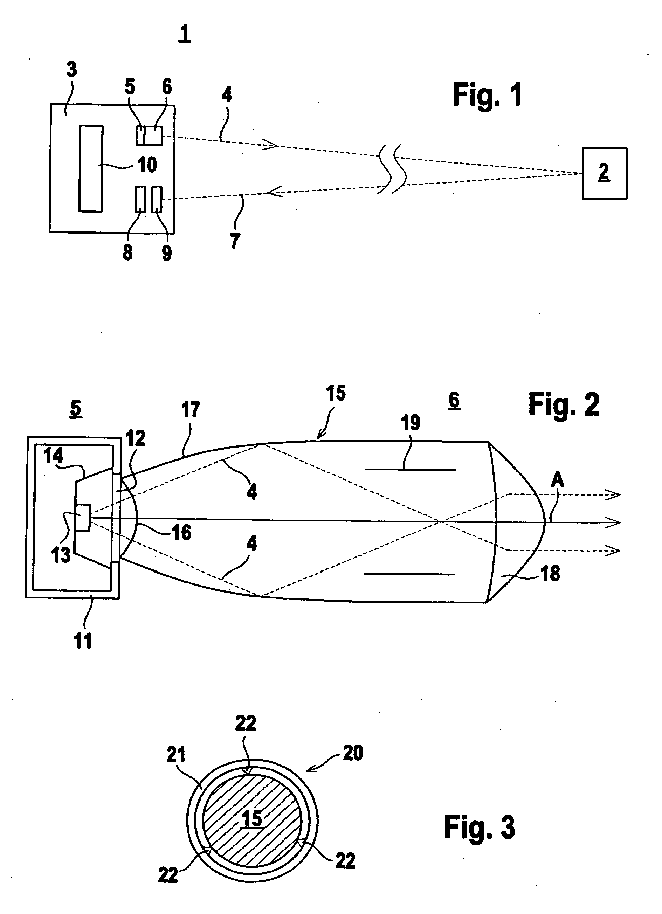

Figur 1 zeigt schematisch den Aufbau eines optischen Sensors 1 zur Erfassung von Objekten 2 in einem Überwachungsbereich. Der optische Sensor ist im vorliegenden Fall als Kontrast-Lichttaster ausgebildet. Prinzipiell kann der optische Sensor auch als Distanzsensor, Lichtschranke, Reflexionslichtschranke oder dergleichen gebildet sein.

Der optische Sensor gemäß Figur 1 weist ein Sensorgehäuse 3 auf, in welchem ein Sendelichtstrahlen 4 emittierender Sender 5 mit einer zugeordneter Sendeoptik 6 und ein Empfangslichtstrahlen 7 empfangender Empfänger 8 mit einer zugeordneten Empfangsoptik 9 angeordnet sind. Der Sender 5 ist im vorliegenden Fall von einer Leuchtdiode gebildet. Prinzipiell kann der Sender 5 auch von einer Laserdiode gebildet sein. Der Empfänger 8 kann von einem einzelnen Empfangselement wie einer Photodiode gebildet sein. Alternativ kann der Empfänger 8 mehrere Empfangselemente aufweisen. Die Sendeoptik 6 dient zur Strahlformung der Sendelichtstrahlen 4. Die Empfangsoptik 9 dient zur Fokussierung der Empfangslichtstrahlen 7 auf den Empfänger 8.

Die vom Sender 5 emittierten Sendelichtstrahlen 4 werden in den Überwachungsbereich geführt und treffen auf ein zu detektierendes Objekt 2. Von dort werden die Sendelichtstrahlen 4 als Empfangslichtstrahlen 7 zurück zum Empfänger 8 reflektiert. Die dabei generierten Empfangssignale werden in einer Auswerteeinheit 10 ausgewertet, die ebenfalls im Sensorgehäuse 3 integriert ist. Die Auswerteeinheit 10 ist von einem Mikroprozessor oder dergleichen gebildet. In der Auswerteeinheit 10 wird beispielsweise durch eine Schwellwertbewertung ein Objektfeststellungssignal generiert. Das Objektfeststellungssignal wird über einen nicht dargestellten Ausgang des optischen Sensors 1 ausgegeben.

Figur 2 zeigt eine Detaildarstellung des Senders 5 und der zugeordneten Sendeoptik 6 für den optischen Sensor 1 gemäß Figur 1. Der von einer Leuchtdiode gebildete Sender 5 ist in einem Gehäuse 11 integriert, in dessen Frontwand ein Fenster 12 vorgesehen ist, welches auch in Form einer transparenten Vergussmasse ausgebildet sein kann. Die Sendelichtstrahlen 4 werden von einem Chip 13 emittiert, der von einem Reflektortrichter 14 umgeben ist. Das vom Chip 13 emittierte Sendelicht gelangt direkt oder nach Reflexion an dem Reflektortrichter 14 aus dem Sender 5. Die so generierten Sendelichtstrahlen 4 des Senders 5 weisen generell eine divergierte Strahlcharakteristik auf.

Die Sendeoptik 6 weist einen Konzentrator 15 auf, der in Form eines transparenten Kunststoff-Spritzgussteils ausgebildet ist. Wie aus Figur 2 ersichtlich ist der Konzentrator 15 unmittelbar auf den Sender 5 so aufgesetzt, dass die Längsachse A des Konzentrators 15 mit der optischen Achse des Senders 5 zusammenfällt.

An der dem Sender 5 zugewandten Stirnseite des Konzentrators 15 ist eine Einkoppelfläche 16 vorgesehen, über welche die vom Sender 5 emittierten Sendelichtstrahlen 4 in den Konzentrator 15 eingekoppelt werden. Die Einkoppelfläche 16 ist konkav ausgebildet und bildet dadurch ein optisches Element mit welchem die Sendelichtstrahlen 4 in den Konzentrator 15 geführt werden. Die Einkoppelfläche 16 ist dabei als sphärische Fläche ausgebildet. Alternativ kann die Einkoppelfläche 16 auch als asphärische Fläche oder als Freiformfläche ausgebildet sein. Wesentlich ist generell, dass der Konzentrator 15 mit der Einkoppelfläche 16 direkt an den Sender 5 anschließt und dabei die gesamte Fläche des Fensters 12 abdeckt, so dass die gesamten oder wenigstens nahezu die gesamten Sendelichtstrahlen 4 über die Einkoppelfläche 16 in den Konzentrator 15 eingekoppelt werden.

Die Sendelichtstrahlen 4 werden dann innerhalb des Konzentrators 15 in Richtung dessen Längsachse A geführt. Die Mantelfläche 17 des Konzentrators 15 ist so geformt, dass an dieser eine Totalreflexion der Sendelichtstrahlen 4 erfolgt, wodurch gewährleistet ist, dass nahezu kein Sendelicht über die Mantelfläche 17 austritt. Besonders vorteilhaft ist die Mantelfläche 17 verspiegelt, so dass über diese keine Sendelichtstrahlen 4 mehr austreten.

Die Mantelfläche 17 des Konzentrators 15 ist so ausgebildet, dass eine vollständige Führung der Sendelichtstrahlen 4 im Konzentrator 15 erhalten wird. Zudem trägt die Gestaltung der Mantelfläche 17 auch zur Strahlformung der Sendelichtstrahlen 4 bei. Im vorliegenden Fall weist die Mantelfläche 17 eine parabolische Form auf. Prinzipiell kann die Mantelfläche 17 eine, zumindest segmentweise, zylindrische Form aufweisen. Weiterhin kann die Mantelfläche 17 als Freiformfläche ausgebildet sein.

An der dem Sender 5 abgewandten Stirnseite des Konzentrators 15 ist eine Austrittsfläche 18 vorgesehen, über welche die Sendelichtstrahlen 4 aus dem Konzentrator 15 geführt werden. Durch eine spezifische Formgebung der Austrittsfläche 18 kann das Strahlprofil der Sendelichtstrahlen 4 genau vorgegeben werden. Im vorliegenden Ausführungsbeispiel weist die Austrittsfläche 18 die Form einer torischen Fläche auf. Mit einer derart ausgebildeten Austrittsfläche 18 können, ohne Einsatz zusätzlicher Optikelemente wie Blenden und dergleichen, Sendelichtstrahlen 4 mit einem quadratischen oder rechteckigen Strahlquerschnitt erzeugt werden. Generell kann die Austrittsfläche 18 auch von anderen konvexen Flächen wie sphärischen Flächen, asphärischen Flächen oder Freiformflächen gebildet sein.

In Figur 2 sind zwei von insgesamt drei Linien auf den Mantelflächen 17 dargestellt, die Auflagelinien 19 zur Auflage von Elementen einer Halterung 20 bilden, die in Figur 3 in einer Querschnittsdarstellung dargestellt ist.

Mit der Halterung 20 wird der die Sendeoptik 6 bildende Konzentrator 15 in dem Sensorgehäuse 3 des optischen Sensors 1 ortsfest gelagert, so dass er in der vorgesehenen Sollposition zu dem ebenfalls im Sensorgehäuse 3 ortsfest gelagerten Sender 5 positioniert ist.

Die Halterung 20 gemäß Figur 3 bildet eine Dreipunktlagerung für den Konzentrator 15. Die Halterung 20 weist eine ringförmige Aufnahme 21 auf, von deren Innenseite drei identisch ausgebildete Kontaktelemente 22 hervorstehen.

Die Kontaktelemente 22 sind in Umfangsrichtung der Aufnahme 21 jeweils um 120° versetzt zueinander angeordnet. Die Kontaktelemente 22 sind linienförmig ausgebildet, wobei deren parallel zueinander verlaufende Längsachsen A senkrecht zur Zeichenebene in Figur 3 orientiert sind. Die Kontaktelemente 22 weisen jeweils zwei Seitenflächen auf, die auf eine Vorderkante zulaufen. Mit diesen Vorderkanten liegen die Kontaktelemente 22 der Halterung 20 entlang der Auflagelinien 19 an der Mantelfläche 17 des Konzentrators 15 an. Da somit die Kontaktelemente 22 nur linienförmig, keine großflächigen Auflageflächen auf der Mantelfläche 17 des Konzentrators 15 bilden, ist gewährleistet, dass dort nur ein sehr geringer Anteil der Sendelichtstrahlen 4 austritt.

### Bezugszeichenliste

- (1): optischer Sensor
- (2): Objekt
- (3): Sensorgehäuse
- (4): Sendelichtstrahlen
- (5): Sender
- (6): Sendeoptik
- (7): Empfangslichtstrahlen
- (8): Empfänger
- (9): Empfangsoptik
- (10): Auswerteeinheit
- (11): Gehäuse
- (12): Fenster
- (13): Chip
- (14): Reflektortrichter
- (15): Konzentrator
- (16): Einkoppelfläche
- (17): Mantelfläche
- (18): Austrittsfläche
- (19): Auflagelinie
- (20): Halterung
- (21): Aufnahme
- (22): Kontaktelement
- (A): Längsachse

## Patentansprüche

1. Optischer Sensor (1) zur Erfassung von Objekten (2) in einem Überwachungsbereich, mit einem Sendelichtstrahlen (4) emittierenden Sender (5), einem Empfangslichtstrahlen (7) empfangenden Empfänger (8), einer Auswerteeinheit (10), in welcher in Abhängigkeit der Empfangssignale am Ausgang des Empfängers (8) ein Objektfeststellungssignal generiert wird, und mit einer dem Sender (5) vorgeordneten Sendeoptik (6) zur Strahlformung der Sendelichtstrahlen (4), **dadurch gekennzeichnet, dass** der Sender (5) in einem Gehäuse (11) integriert ist, in dessen Frontwand ein Fenster (12) vorgesehen ist, dass der Sender (5) einen Sendelichtstrahlen (4) emittierenden Chip (13), der von einem Reflektorrichter (14) umgeben ist, aufweist, wobei Sendelichtstrahlen (4) die vom Chip (3) emittiert werden, direkt oder nach Reflexion an dem Reflektortrichter (14) aus dem Sender (5) gelangen und eine divergente Strahlcharakteristik aufweisen, wobei die Sendeoptik (6) unmittelbar an den Sender (5) anschließt, und dass die Sendeoptik (6) einen Konzentrator (15) aufweist, der ein Lichtführungselement für die Sendelichtstrahlen (4) bildet, wobei hierzu an der Mantelfläche (17) des Konzentrators (15) eine Totalreflexion der Sendelichtstrahlen (4) erfolgt, wobei die dem Sender (5) zugeordnete Stirnseite des Konzentrators als konkave Einkoppelfläche (16) für die Sendelichtstrahlen (4) ausgebildet ist, welche die gesamte Fläche des Fensters (12) abdeckt, wobei die Sendelichtstrahlen (4) innerhalb des Konzentrators (15) in Richtung dessen Längsachse geführt sind, und wobei an der dem Sender (5) abgewandten Stirnseite des Konzentrators (15) eine Austrittsfläche (18) vorgesehen ist, welche ein Strahlformungsmittel für die Sendelichtstrahlen (4) bildet, und welche eine konvexe Fläche ist.

2. Optischer Sensor nach Anspruch 1, **dadurch gekennzeichnet, dass** die Längsachse (A) des Konzentrators (15) mit der Strahlachse der vom Sender (5) emittierten Sendelichtstrahlen (4) zusammenfällt, wobei die Lichtführung der Sendelichtstrahlen (4) im Konzentrator (15) entlang dessen Längsachse (A) erfolgt.

3. Optischer Sensor nach einem der Ansprüche 1 oder 2, **dadurch gekennzeichnet, dass** der Konzentrator (15) eine parabolische Mantelfläche (17) aufweist.

4. Optischer Sensor nach einem der Ansprüche 1 oder 2, **dadurch gekennzeichnet, dass** die Mantelfläche (17) des Konzentrators (15) eine zylindrische Form aufweist oder eine Freiformfläche bildet.

5. Optischer Sensor nach einem der Ansprüche 1 bis 5, **dadurch gekennzeichnet, dass** die Austrittsfläche (18) des Konzentrators (15) als torische Fläche, als sphärische oder asphärische Fläche oder als Freiformfläche ausgebildet ist.

6. Optischer Sensor nach einem der Ansprüche 1 bis 5, **dadurch gekennzeichnet, dass** die Einkoppelfläche (16) eine spährische Fläche ist.

7. Optischer Sensor nach einem der Ansprüche 1 bis 5, **dadurch gekennzeichnet, dass** die Einkoppelfläche (16) eine asphärische Fläche ist.

8. Optischer Sensor nach einem der Ansprüche 1 bis 5, **dadurch gekennzeichnet, dass** die Einkoppelfläche (16) eine Freiformfläche ist.

9. Optischer Sensor nach einem der Ansprüche 1 bis 8, **dadurch gekennzeichnet, dass** der Konzentrator (15) aus Kunststoff besteht.

10. Optischer Sensor nach einem der Ansprüche 1 bis 9, **dadurch gekennzeichnet, dass** die Mantelflächen (17) des Konzentrators (15) verspiegelt sind.

11. Optischer Sensor nach einem der Ansprüche 1 bis 10, **dadurch gekennzeichnet, dass** zur Lagefixierung der Sendeoptik (6) eine Halterung (20) vorgesehen ist, die punkt- oder linienförmige Kontaktelemente (22) aufweist, die an der Mantelfläche (17) des Konzentrators (15) anliegen.

12. Optischer Sensor nach Anspruch 11, **dadurch gekennzeichnet, dass** die Halterung (20) eine Dreipunktlagerung des Konzentrators (15) bildet.

13. Optischer Sensor nach einem der Ansprüche 1 bis 12, **dadurch gekennzeichnet, dass** der Sender (5) von einer Laserdiode oder einer Leuchtdiode gebildet ist.

## Claims

1. Optical sensor (1) for detecting objects (2) in a monitoring region, comprising a transmitter (5) emitting transmitted light beams (4), a receiver (8) receiving received light beams (7), an evaluating unit (10) in which an object detection signal is generated in dependence on the received signals at the output of the receiver (8), and a transmitting optical system (6), which is arranged upstream of the transmitter (5), for beam shaping of the transmitted light beams (5), **characterised in that** the transmitter (5) is integrated in a housing (11), in the front wall of which a window (12) is provided, that the transmitter (5) comprises a chip (13) which emits transmitted light beams (4) and is surrounded by a reflector coner (14), wherein transmitted light beams (4) emitted by the chip (13) pass directly or after reflection at the reflector cone (14) out of the transmitter (5) and have a divergent beam characteristic, wherein the transmitting optical system (6) is directly connected with the transmitter (5), and that the transmitting optical system (6) has a concentrator (15) which forms a light guide element for the transmitted light beams (4), wherein for this purpose a total reflection of the transmitted light beams (4) takes place at the circumferential surface (17) of the concentrator (15), wherein the end face, which is associated with the transmitter (5), of the concentrator is formed as a concave coupling-in surface (16) for the transmitted light beams (4), which covers the entire area of the window (12), wherein the transmitted light beams (4) are guided within the concentrator (15) in the direction of the longitudinal axis thereof, and wherein provided at the end face of the concentrator (15) remote from the transmitter (5) is an exit surface (18) which forms a beam shaping means for the transmitted light beams (4) and which is a convex surface.

2. Optical sensor according to claim 1, **characterised in that** the longitudinal axis (A) of the concentrator (15) coincides with the beam axis of the transmitted light beams (4) emitted by the transmitter (5), wherein the light guidance of the transmitted light beams (4) in the concentrator (15) takes place along the longitudinal axis (A) thereof.

3. Optical sensor according to one of claims 1 and 2, **characterised in that** the concentrator (15) has a parabolic circumferential surface (17).

4. Optical sensor according to one of claims 1 and 2, **characterised in that** the circumferential surface (17) of the concentrator (15) has a cylindrical form or forms a free shape surface.

5. Optical sensor according to any one of claims 1 to 4, **characterised in that** the exit surface (18) of the concentrator (15) is formed as a toroidal surface, as a spherical or an aspherical surface or as a free shape surface.

6. Optical sensor according to any one of claims 1 to 5, **characterised in that** the coupling-in surface (16) is a spherical surface.

7. Optical sensor according to any one of claims 1 to 5, **characterised in that** the coupling-in surface (16) is an aspherical surface.

8. Optical sensor according to any one of claims 1 to 5, **characterised in that** the coupling-in surface (16) is a free shape surface.

9. Optical sensor according to any one of claims 1 to 8, **characterised in that** the concentrator (15) consists of plastics material.

10. Optical sensor according to any one of claims 1 to 9, **characterised in that** the circumferential surfaces (17) of the concentrator (15) are reflective.

11. Optical sensor according to any one of claims 1 to 10, **characterised in that** provided for positional fixing of the transmitting optical system (6) is a mount (20) having punctiform or lineal contact elements (22) bearing against the circumferential surface (17) of the concentrator (15).

12. Optical sensor according to claim 11, **characterised in that** the mount (20) forms a three-point mounting of the concentrator (15).

13. Optical sensor according to any one of claims 1 to 12, **characterised in that** the transmitter (5) is formed by a laser diode or a light-emitting diode.

## Revendications

1. Capteur optique (1) pour la détection d'objets (2) dans une zone de surveillance, avec un émetteur (5) émettent des rayons lumineux d'émission (4), un récepteur (8) recevant des rayons lumineux de réception (7), une unité d'évaluation (10) dans laquelle est généré un signal de détection d'objet en fonction des signaux de réception à la sortie du récepteur (8), et avec une optique d'émission (6) placée devant l'émetteur (5) pour mettre en forme le faisceau des rayons lumineux d'émission (4), **caractérisé en ce que** l'émetteur (5) est intégré dans un boîtier (11) dans la face avant duquel est prévue une fenêtre (12), que l'émetteur (5) présente une puce (13) émettant des rayons lumineux d'émission (4), qui est entourée par un cône réflecteur (14), les rayons lumineux d'émission (4) qui sont émis par la puce (13) parvenant de l'émetteur (5) directement ou après réflexion sur le cône réflecteur (14) et présentant une caractéristique de faisceau divergente, l'optique d'émission (6) faisant directement suite à l'émetteur (5), et que l'optique d'émission (6) présente un concentrateur (15) qui forme un élément de guidage de lumière pour les rayons lumineux d'émission (4), une réflexion totale des rayons lumineux d'émission (4) ayant lieu à cet effet sur la surface d'enveloppe (17) du concentrateur (15), le côté frontal du concentrateur associé à l'émetteur (5) étant formé comme surface de couplage concave (16) pour les rayons lumineux d'émission (4), laquelle recouvre toute la surface de la fenêtre (12), les rayons lumineux d'émission (4) étant guidés à l'intérieur du concentrateur (15) dans la direction de son axe longitudinal, et une surface de sortie (18) étant prévue sur le côté frontal du concentrateur (15) éloigné de l'émetteur (5), laquelle forme un moyen de mise en forme de faisceau pour les rayons lumineux d'émission (4) et laquelle est une surface convexe.

2. Capteur optique selon la revendication 1, **caractérisé en ce que** l'axe longitudinal (A) du concentrateur (15) coïncide avec l'axe de faisceau des rayons lumineux d'émission (4) émis par l'émetteur (5), le guidage des rayons lumineux d'émission (4) dans le concentrateur (15) ayant lieu suivant son axe longitudinal (A).

3. Capteur optique selon une des revendications 1 ou 2, **caractérisé en ce que** le concentrateur (15) présente une surface d'enveloppe (17) parabolique.

4. Capteur optique selon une des revendications 1 ou 2, **caractérisé en ce que** la surface d'enveloppe (17) du concentrateur (15) présente une forme cylindrique ou forme une surface de forme libre.

5. Capteur optique selon une des revendications 1 à 4, **caractérisé en ce que** la surface de sortie (18) du concentrateur (15) est réalisée sous la forme d'une surface torique, d'une surface sphérique ou asphérique ou d'une surface de forme libre.

6. Capteur optique selon une des revendications 1 à 5, **caractérisé en ce que** la surface de couplage (16) est une surface sphérique.

7. Capteur optique selon une des revendications 1 à 5, **caractérisé en ce que** la surface de couplage (16) est une surface asphérique.

8. Capteur optique selon une des revendications 1 à 5, **caractérisé en ce que** la surface de couplage (16) est une surface de forme libre.

9. Capteur optique selon une des revendications 1 à 8, **caractérisé en ce que** le concentrateur (15) est en matière plastique.

10. Capteur optique selon une des revendications 1 à 9, **caractérisé en ce que** les surfaces d'enveloppe (17) du concentrateur (15) sont pourvues d'une couche réfléchissante.

11. Capteur optique selon une des revendications 1 à 10, **caractérisé en ce que** pour fixer l'optique d'émission (6) en position, il est prévu un dispositif de maintien (20) qui présente des éléments de contact (22) ponctuels ou linéaires qui s'appuient sur la surface d'enveloppe (17) du concentrateur (15).

12. Capteur optique selon la revendication 11, **caractérisé en ce que** le dispositif de maintien (20) forme une suspension par trois points du concentrateur (15).

13. Capteur optique selon une des revendications 1 à 12, **caractérisé en ce que** l'émetteur (5) est formé par une diode laser ou une diode électroluminescente.
